# EUROPÄISCHE PATENTSCHRIFT

(11) **EP 1 113 745 B1**
(45) Veröffentlichungstag und Bekanntmachung des Hinweises auf die Patenterteilung: **03.04.2002**
(21) Anmeldenummer: 00901095.0
(22) Anmeldetag: 13.01.2000
(51) Int. Cl.: A47J 27/21, A47J 42/56

(54) **ELEKTRISCH BEHEIZBARER WASSERKOCHER**
ELECTRIC KETTLE
BOUILLOIRE ELECTRIQUE

(30) Priorität: 11.02.1999 DE 19905641
(43) Veröffentlichungstag der Anmeldung: 11.07.2001
(73) Patentinhaber: Braun GmbH, 61476 Kronberg (DE)
(72) Erfinder: HOFFMANN, Günter, D-65719 Hofheim (DE); NEUHÄUSER, Ralph, 86152 Augsburg (DE)
(86) Internationale Anmeldenummer: EP0000180
(87) Internationale Veröffentlichungsnummer: WO0047093

(56) Entgegenhaltungen:
- DE-A- 19 736 821
- DE-U- 29 603 838
- US-A- 5 429 039
- PATENT ABSTRACTS OF JAPAN vol. 017, no. 468 (C-1102), 26. August 1993 (1993-08-26) & JP 05 115372 A (MATSUSHITA ELECTRIC IND CO LTD), 14. Mai 1993 (1993-05-14)

## Beschreibung

Die Erfindung betrifft einen elektrisch beheizbaren Wasserkocher, bestehend aus einem Behälter mit einem Boden, an den sich nach oben eine umlaufende Seitenwand mit einem daran ausgebildeten Handgriff anschließt, deren freies Ende von einer Öffnung gebildet wird, die von einem Deckel im wesentlichen verschließbar ist, mit einer in Nähe des Bodens ausgebildeten elektrischen Heizung, die von einem mechanisch gesteuerten Schalter ein- bzw. ausschaltbar ist und die bei eingeschaltetem Gerät im Behälter befindliches Wasser erhitzt, mit einem an den Schalter gekoppelten und von Hand bedienbaren Betätigungselement, das bei dessen mechanischer Betätigung eine Bewegung auf den Schalter überträgt und mit einer am Deckel angreifenden, von Hand betätigbaren Taste, die bei ihrer Betätigung den Deckel zum Öffnen freigibt (vgl. zum Beispiel DE-U-29603838).

Ein derartiger Wasserkocher ist bereits im Handel und wird von der Firma Petra Elektrik, D-89331 Burgau, unter der Bezeichnung "Wasserkocher WK 12" vertrieben. Der die Öffnung des Behälters verschließende Deckel kann über eine oberhalb des Handgriffs an der Wand des Behälters und am Deckel gelagerte Taste geöffnet bzw. verschlossen werden. Im unteren Bereich des Wasserkochers steht seitlich an dem Handgriff ein Betätigungselement hervor, das mit einem Schalter zum Ein- bzw. Ausschalten der in Bodennähe ausgebildeten Heizeinrichtung mechanisch verbunden ist.

Aufgabe der Erfindung ist es, einen Wasserkocher zu schaffen, durch den die Sicherheit des Gerätes erhöht wird, so daß insbesondere Verbrühungen einer Hand weitgehendst vermieden werden können.

Diese Aufgabe wird erfindungsgemäß durch die Merkmale des kennzeichnenden Teils des Patentanspruchs 1 gelöst. Durch die Erfindung wird sichergestellt, daß die Heizung des Wasserkochers nur dann in Betrieb ist, wenn der Deckel den Behälter sicher verschließt. Sobald der Deckel in Betrieb des Wasserkochers die Öffnung des Behälters freigibt, wird die Heizung abgeschaltet. Dies hat den Vorteil, daß die Produktion von überhitztem Dampf, der die Öffnung des Behälters verläßt, nachläßt und so nicht allzuviel überkochendes Wasser aus der Öffnung austreten kann. Auch Verbrühungen einer Hand werden bei unbeabsichtigtem Eingreifen in die Öffnung verringert, da nach Abschalten der Heizung kurze Zeit danach auch überhitzter Dampf nicht mehr aus der Öffnung tritt. Durch die erfindungsgemäße Sicherheitseinrichtung steht der Wasserkocher im Betrieb niemals mehr kochend mit geöffnetem Deckel, also mit geöffneter Öffnung in der Küche. Ein unbeabsichtigtes Umkippen des Wasserkochers hat dann auch nicht unangenehme Verbrühungen zur Folge, da im Kochzustand die Öffnung des Behälters immer durch den Deckel verschlossen ist. Um auch der Einfachheit halber bei "geschlossenem" Deckel Wasser begrenzt in den Wasserkocher einzufüllen bzw. aus ihm ausgießen zu können und um gleichzeitig beim Kochvorgang Dampf entweichen zu lassen, ist die Aus- bzw. Eingießstelle nicht ganz vom Deckel verschlossen, sondern sie ist in der Regel von einem Sieb abgedeckt. Der Querschnitt der Aus- bzw. Eingießstelle ist allerdings so klein bemessen, daß hierüber oder beim Umfallen des Wasserkochers heißes Wasser nur begrenzt austreten kann. Unangenehme Verbrühungen sind somit praktisch ausgeschlossen.

Beim Aufkochen von Wasser geht dieses immer in kurzes Blasensieden über, bis das Thermostat die Heizung automatisch abschaltet. Die erfindungsgemäße Sicherheitsvorrichtung schützt insbesondere Kinder vor Unfällen, da diese den Wasserkocher auch nur dann einschalten können, wenn der Deckel die Öffnung des Behälters verriegelt. Ein unbeabsichtigtes Eingreifen beim Aufkochen des Wasserkochers ist deshalb nicht möglich, weil der Dekkel die Öffnung des Behälters so weit verschließt, daß auch kleine Kinderhände nicht im Betrieb des Wasserkochers in die Öffnung der Aus- bzw. Eingießstelle eingreifen können.

Gemäß den Merkmalen des Patentanspruchs 2 wird die Bedienungsfreundlichkeit und Sicherheit des Wasserkochers noch verbessert. Sobald nämlich der Deckel durch die Taste geöffnet wird, schaltet sich automatisch die Heizung und damit der Wasserkocher aus. Dies reduziert die Zeit des Nachkochens des Wassers, so daß, bis der Deckel geöffnet ist, sich das Wasser wieder beruhigt hat. Zu diesem Zweck sind am Wasserkessel Mittel vorgesehen, die beim Betätigen der Taste nicht sofort den Deckel gänzlich aufspringen lassen, sondern ihn nur leicht von der Öffnung abheben.

Die den Schalter sowie den Deckel freigebenden bzw. sperrenden Einrichtungen können mechanische oder elektromechanische Mittel sein, die von einer elektronischen Steuerung gesteuert werden. Bei den elektromechanischen Mitteln handelt es sich beispielsweise um Relais, die elektrische Impulse in mechanische Bewegungen umsetzen, die dann den Deckel verriegeln und dabei gleichzeitig das Betätigungselement, also den Schalter zum Einschalten freigeben. Derartige elektromechanische Lösungen sind aber verhältnismäßig aufwendig und teuer. Kostengünstiger und ebenso wirkungsvoll sind rein mechanische Mittel.

Gemäß den Merkmalen des Patentanspruchs 3 dient die am Betätigungselement ausgebildete Mitnehmereinrichtung dazu, die Taste in ihrer Bewegung zu sperren, wenn sich der Deckel in seiner Offenstellung befindet. Dies erfolgt über das Sperrelement, das wiederum das Betätigungselement sperrt, welches letztendlich wiederum seine Sperrung auf die Taste überträgt.

An dieser Stelle sei noch erwähnt, daß unter der Offenstellung des Deckels nicht nur die Stellung zu verstehen ist, in der der Deckel die Öffnung nicht nur sichtbar geöffnet hat, sondern auch diejenige Stellung zu verstehen ist, in der zwar der Deckel die Öffnung noch verschließt, in der aber bereits die den Deckel am Behälter verschließende Verschließeinrichtung um ein bestimmtes Maß betätigt wurde. Diese Art von Offenstellung beginnt also kurz bevor die Sicherheitseinrichtung den Deckel zum Öffnen freigibt bzw. gerade dann, wenn diese den Deckel zum Öffnen freigegeben hat. Hierdurch soll mit Sicherheit garantiert werden, daß aufgrund der bei der Herstellung des Sperrelements, des Betätigungselements, der Taste und des Deckels zwangsweise auftretenden Toleranzen nach ihrem Zusammenbau niemals derjenige Fall eintreten kann, daß infolge von sich addierenden Toleranzen der Deckel bereits die Öffnung des Behälters geringfügig öffnet und dabei auch noch das Betätigungselement eingeschaltet werden kann.

Durch die Merkmale des Patentanspruchs 4 werden in Abhängigkeit des Sperrelements sowohl die Taste wie das Betätigungselement nicht mit elektromechanischen sondern mit reinen mechanischen Mitteln zwangsgesteuert, so daß nur in Abhängigkeit einer bestimmten Stellung des Sperrelements das vorzugsweise als Schaltwippe ausgebildete Betätigungselement - und davon wieder abhängig - die Taste bewegt bzw. nicht bewegt werden können. Eine Hebelgetriebeanordnung ist dabei besonders einfach herstellbar, da sie lediglich wenigstens aus drei, vorzugsweise aus Kunststoff hergestellten Hebeln besteht, die mechanisch derart gekoppelt sind, daß nur in bestimmten Positionen des Deckels der elektrische Schalter eingeschaltet werden kann.

Für eine bessere Bedienung des Deckels sorgen die Merkmale des Anspruchs 5. Dabei kann die Taste hin- und herverschiebbar, kippbar, schwenkbar, drehbar oder sonstwie gelagert sein. Zum Öffnen des Deckels geben bei Betätigung der Taste und bei geschlossenem Deckel die am Deckel ausgebildete Hebeleinrichtung die Verriegelung am Behälter frei, so daß der Deckel teilweise aufspringen kann, d.h. nur soweit, bis die Hebelenden mit ihren Rampen an der Oberkante der Öffnung des Wasserkochers anliegen. Beim Verschließen des Deckels greifen die Hebel dann rastend in die am Behälter ausgebildeten Rastlöcher ein und das Betätigungselement wird zum Einschalten des Schalters freigegeben.

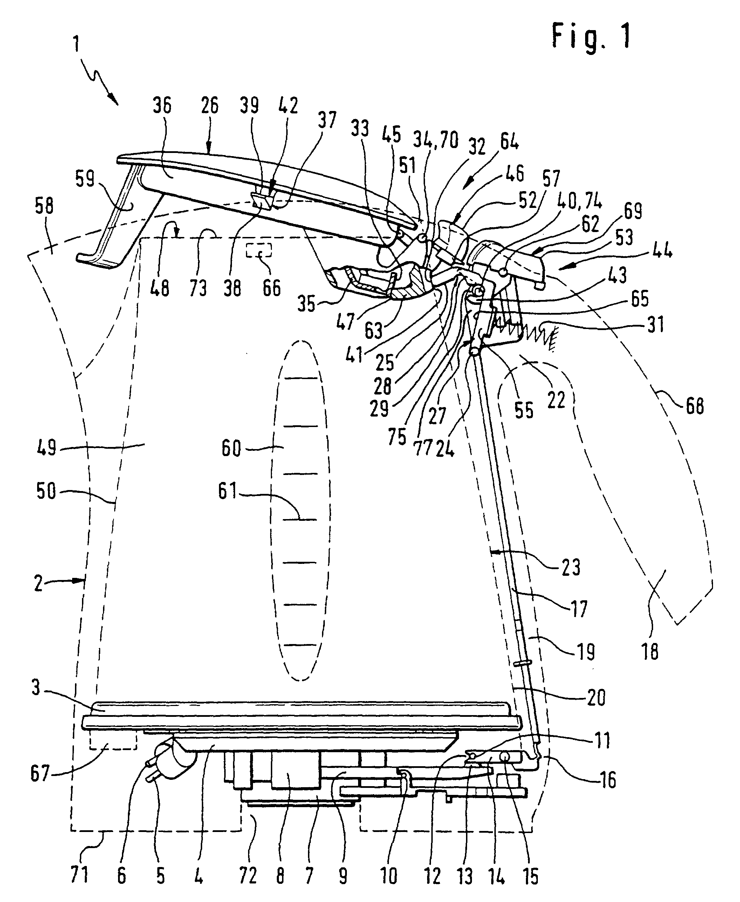

Durch die Merkmale des Patentanspruchs 6 sind teils aus Sicherheitsgründen teils aufgrund des begrenzten Kräftespiels die Drehachsen von Deckel, Taste, Betätigungselement und Sperrelement voneinander am Gehäuse des Behälters getrennt angeordnet. Dies führt letztendlich dazu, daß, wenn auch geringere Betätigungskräfte von einer Bedienungsperson an der Taste oder an der Schaltwippe eingeleitet werden, bereits die Sicherheitseinrichtung in Funktion gesetzt wird. Nach der Drehachse des Sperrhebels folgt räumlich von unten nach oben gesehen (Figuren 1 bis 5) die Drehachse des Betätigungselements, dann die Drehachse des Deckels und letztendlich die Drehachse der Taste. Dabei sind die Hebelverhältnisse so ausgelegt, daß die Kinematik bei geringem Platzbedarf leichtgängig, sicher, äußerst zuverlässig und exakt arbeitet.

Durch die Merkmale des Patentanspruchs 7 sind die Schaltwippe und die Schubstange gelenkig und mechanisch miteinander gekoppelt. Gleichzeitig dienen die Steuerzapfen als Anschlag für das Sperrelement und steuern so in Abhängigkeit der Stellung der Taste das Betätigungselement auf einfache Weise.

Um eine einfache Bedienung mittels parallel verlaufender Schwenkachsen des Wasserkochers zu ermöglichen, sind die Merkmale des Patentanspruchs 8 vorgesehen.

Durch die Merkmale des Patentanspruchs 9 sind das Betätigungselement und die Taste von oben her besonders leicht zugänglich und können von einer Bedienungsperson sehr leicht erkannt werden. Hierbei ist es also möglich, bei geschlossenem Deckel mit Hilfe eines Fingers, der an der den Deckel haltenden Hand ausgebildet ist, das Betätigungsfeld der Taste zu betätigen, um dadurch den Deckel zu öffnen. Dabei wird dann gleichzeitig über die Taste das Betätigungselement und somit der Schalter ausgeschaltet, wenn dieser eingeschaltet war. Dadurch, daß auch noch die Taste und das Betätigungselement in Nähe des Übergangs des Handgriffs zur Seitenwand des Behälters ausgebildet sind, werden beim Ergreifen des Wasserkochers über den Handgriff Fehlbedienungen vermieden; und dies insbesondere deshalb, weil die Handgrifffläche entfernt von dem Betätigungselement und der Taste angeordnet ist, allerdings nur soweit, daß diese Hand auch noch die Taste oder das Betätigungselement bei festgehaltenem Wasserkocher an der Oberseite bedienen kann, wenn dies gewünscht wird.

Die Zweiteiligkeit des Betätigungselements nach den Merkmalen des Patentanspruchs 10 möglicht eine einfachere Herstellung, insbesondere deshalb, weil eines der Teile einen sehr langgestreckten Abschnitt aufweist. Die Zweiteiligkeit ermöglicht auch die Verwendung unterschiedlicher Materialien. So kann die Schaltwippe vorzugsweise aus lichtdurchlässigem Material bestehen, damit eine aufleuchtende Kontrollampe, die vorzugsweise im Innenraum der Schaltwippe ausgebildet sein kann, von außen bei eingeschaltetem Gerät sichtbar wird, während das langgestreckte zweite Teil, beispielsweise aus nicht lichtdurchlässigem, also kostengünstigerem Kunststoff hergestellt sein kann. Die Zweiteiligkeit des Betätigungselements ermöglicht auch die Umsetzung einer Drehbewegung in eine Axialbewegung, ähnlich einem Kurbelgetriebe, um den entfernt vom Betätigungselement unterhalb des Bodens des Wasserkochers angeordneten Schalter auf einfache Weise betätigen zu können.

Dadurch, daß der die Heizung des Wasserkochers einschaltende elektrische Schalter mit seiner Temperatursteuereinrichtung unterhalb des Bodens des Behälters des Wasserkochers einerseits und das Betätigungselement andererseits weit oberhalb am Handgriff ausgebildet sind, muß die Schubstange nochmals eine Abwinkelung am Boden erfahren, was durch die Merkmale des Patentanspruchs 11 wiedergegeben ist. Der abgewinkelte Kipphebel ist über eine sich anschließende Wippe indirekt mit dem Schalter gekoppelt und ist mit der Schubstange über ein Scharniergelenk verbunden.

Ein Ausführungsbeispiel der Erfindung ist in der Zeichnung dargestellt und wird im folgenden näher beschrieben. Es zeigen:
- Fig. 1: Seitenansicht auf die im Gehäuse des Wasserkochers ausgebildete Sicherheitseinrichtung mit Heizung und Deckel im verkleinerten Maßstab, wobei das Gehäuse des Wasserkochers nur angedeutet und daher gestrichelt dargestellt ist und wobei sich der Deckel in seiner Offenstellung befindet,
- Fig. 2: Seitenansicht gemäß der Ausführung nach Fig. 1, wobei allerdings der Deckel seine Schließstellung eingenommen hat und das Betätigungselement sich noch in seiner Aus-/Stellung befindet,
- Fig. 3: Seitenansicht der Sicherheitseinrichtung nach Fig. 2, wobei allerdings bei geschlossenem Deckel das Betätigungselement in seine Ein-/Stellung verdreht wurde,
- Fig. 4: Seitenansicht in Richtung X auf die Sicherheitseinrichtung nach Fig. 2 bei abgenommenem Handgriff und
- Fig. 5: ausgeschnittener Bereich der Seitenansicht im Bereich der Verriegelungseinrichtung nach Fig. 1 allerdings im vergrößerten Maßstab.

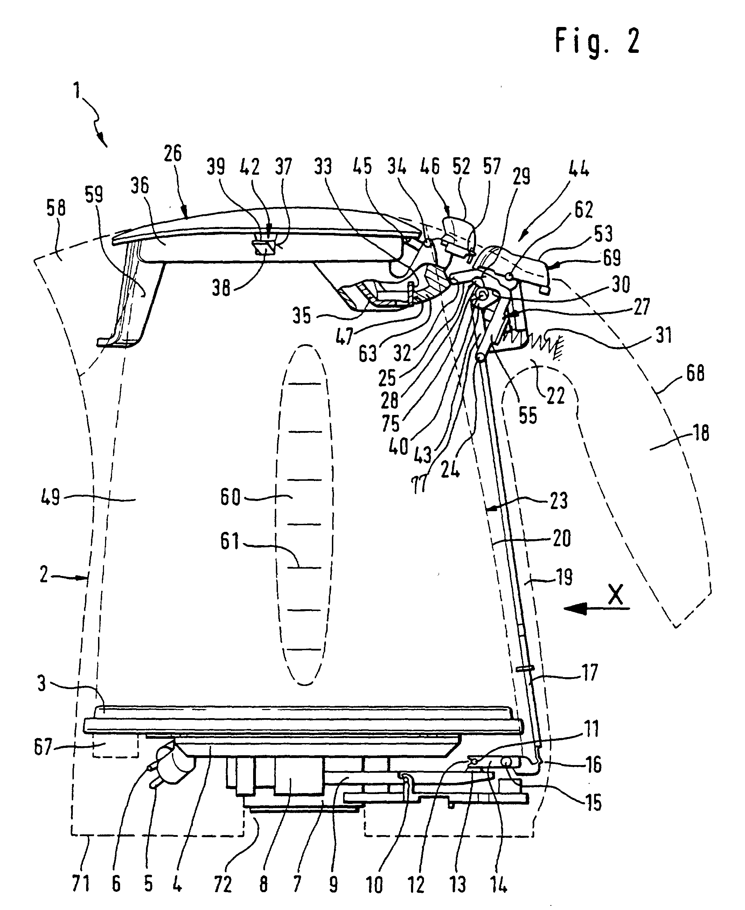

In den Figuren 1 bis 4 besteht der elektrisch betriebene Wasserkocher 1 aus einem vorzugsweise aus Kunststoff oder Edelstahl hergestellten Gehäuse 2, das in den Zeichnungen nur als Umrißlinie gestrichelt dargestellt ist. Das Gehäuse 2 ist als im wesentlichen rohrförmiger Behälter 49 ausgebildet, in dem in seinem unteren Bereich ein aus Stahl eingesetzter Boden 3 dichtend befestigt ist. Unterhalb des Bodens 3 ist an diesem eine ringförmige Heizung 4 gut wärmeleitend befestigt bzw. mit diesem verlötet oder verschweißt. Die Heizung 4 weist nach den Figuren 1 bis 3 an ihren Enden je eine Kontaktfahne 5, 6 auf, die über in der Zeichnung nicht dargestellte Leitungen mit einer innerhalb der rohrförmigen Heizung 4 am Boden 3 ausgebildeten Steckeranordnung 7 stromleitend verbunden ist. Innerhalb des Gehäuses der Steckeranordnung 7 ist ein in der Zeichnung nicht näher dargestellter elektrischer Schalter 8 ausgebildet, der über eine Wippe 9 mechanisch mit einer Schaltwippe 69 verbunden ist. Die Wippe 9 verläuft in Aus-/Stellung des Schalters 8 (Fig. 1 und 2) im wesentlichen parallel zum Boden 3 und ist etwa in seiner Mitte über einen Lagerzapfen 10 in gewissen Grenzen drehbar gelagert.

Die Steckeranordnung 7 besteht aus vorzugsweise kreisförmigen Schaltelementen (nicht dargestellt), die in Form von zwei konzentrisch mit Abstand zueinander verlaufenden Schaltzungen ausgebildet sind und die mit einem an diese Maße angepaßten Gegenstecker (nicht dargestellt), der in einem in der Zeichnung nicht dargestellten Sockelgehäuse ausgebildet ist, kuppelbar ist. Der Gegenstecker ist über eine Stromleitung mit einem Steckdosenstecker (nicht dargestellt) verbunden. Für die Zugänglichkeit der Steckeranordnung 7 sorgt eine im Bodendeckel 71 des Gehäuses 2 ausgebildete Öffnung 72. Die so gebildete Steckeranordnung versorgt den Wasserkocher 1 mit Strom, sobald dieser auf den Sockel aufgesetzt wurde. Der Wasserkocher 1 wird durch die Steckeranordnung 7 zu einem sogenannten kabellosen Wasserkocher 1 gemacht.

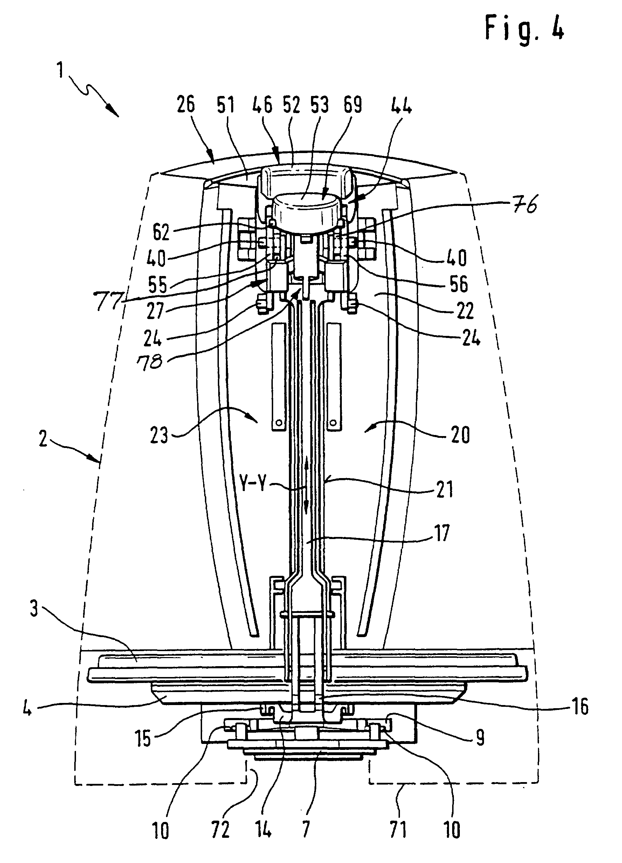

An dem dem Schalter 8 gegenüberliegenden Ende der Wippe 9 erhebt sich von ihr nach oben ein Lagerbock 13, an dem querverlaufend nebeneinander zwei zweite Lagerzapfen 11 ausgebildet sind, auf die ein mit nebeneinander angeordneten Klemmnuten 12 versehener Kipphebel 14 aufgeklipst und drehbar gelagert ist. Der Kipphebel 14 selbst ist über eine erste Drehachse 15 um sich selbst am Gehäuse 2 drehbar gelagert. Das den Klemmnuten 12 gegenüberliegende Ende des Kipphebels 14 ist über ein flexibel bewegbares Scharnier 16 mit einer von dem Kipphebel 14 abgewinkelten Schubstange 17 verbunden, die in dem von dem Handgriff 18 und der Mantelfläche 20 des Gehäuses 2 umgebenen Raum 19 in einer Führungsnut 21 entlang der Mantelfläche 20 in Richtung Y-Y nach oben bzw. nach unten verschiebbar ist (Fig. 4).

Die Schubstange 17 verläuft in den Figuren 1 bis 4 in der Führungsnut 21 nach oben bis in den Raum 22 hinein, der von dem Raum am Übergangsbereich des Handgriffs 18 und der Mantelfläche 23 des Gehäuses 2 gebildet wird. In diesem Raum 22 ist am Gehäuse 2 über eine zweite Drehachse 24 ein nach oben verlaufendes und in Richtung des Deckels 26 abgewinkeltes, als Sperrhebel ausgebildetes Sperrelement 27 drehbar gelagert, das an seiner zur zweiten Drehachse 24 zugewandten Innenfläche 25 eine in einer Ausnehmung 28 ausgebildete Anlagefläche 29 aufweist, an die sich zu seinem Winkeleck hin eine erste Anschlagfläche 30 anschließt. Der Sperrhebel 27 wird mit einer an seinem abgewinkelten freien Ende an der Spitze ausgebildeten zweiten Anschlagfläche 32 gegen eine an einer Taste 46 angeformte erste Nehmerfläche 41 infolge der Kraft einer Druckfeder 31 ständig auf Anlage gehalten. Letzteres allerdings nur so lange, bis die an der Schubstange 17 ausgebildeten Steuerzapfen 40 an der Stirnfläche 65 des Sperrhebels 27 anschlagen.

Bei weiterem Aufklappen des Deckels 26 entfernt sich die erste Nehmerfläche 41 von der zweiten Anschlagfläche 32, da der Sperrhebel 27 über seine Stirnfläche 65 an den Steuerzapfen 40 anschlägt und daher in seiner Drehung entgegen dem Uhrzeigersinn geblockt ist. Die Verbindungslinien der Mittelpunkte der Steuerzapfen 40 bilden gleichzeitig die Kurbelachse 74 zwischen der Schaltwippe 69 und der Schubstange 17. Es wird noch erwähnt, daß zur besseren Lagerung der Deckel 26, die Taste 46, das Betätigungslement 44 und der Sperrhebel 27 an ihren Gelenkachsen stets beidseitig gelagert sind und daher sich diese Teile auch in Richtung auf die Oberseite 68 des Handgriffs 18 betätigen lassen.

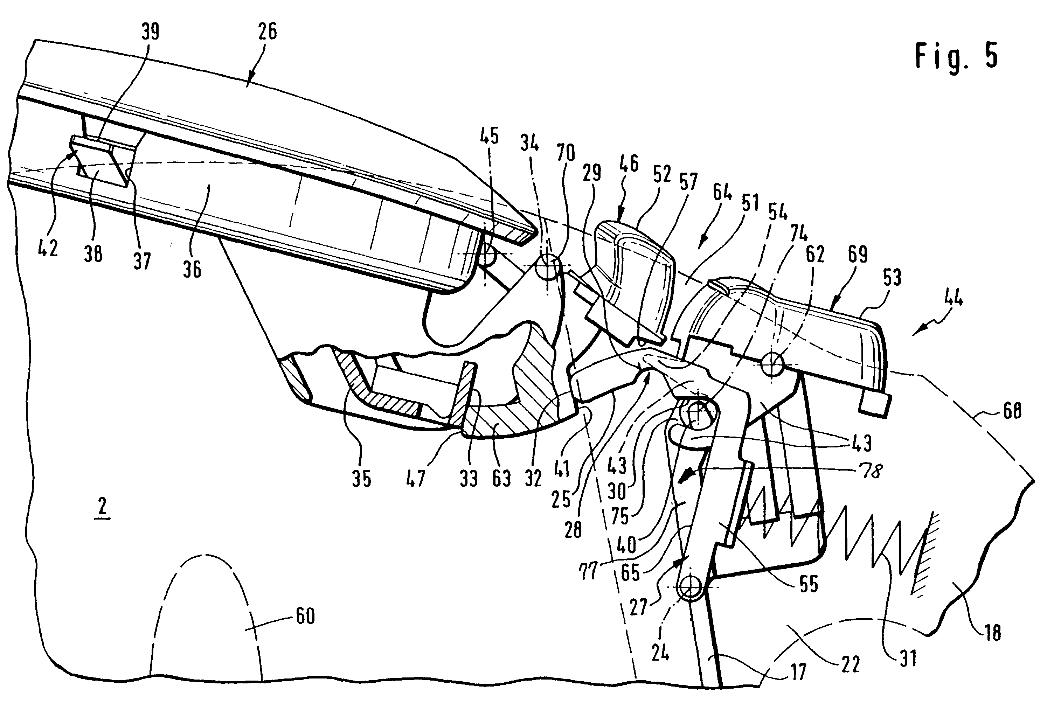

Der Deckel 26 ist nach den Figuren 1 bis 3 über zwei an ihm ausgebildete Zapfen 70 (Fig. 5) am Gehäuse 2 drehbar gelagert, die eine gemeinsame dritte Drehachse 34 bilden, wobei die dritte Drehachse 34 gemäß den Figuren 1 bis 3 oberhalb und, - senkrecht gesehen - leicht links von der ersten Nehmerfläche 41 ausgebildet ist. Links etwa in gleicher Höhe der dritten Drehachse 34 des Deckels 26 ist eine im Gehäuse 2 angeformte vierte Drehachse 45 ausgebildet, auf der die den Deckel 26 öffnende bzw. schließende Taste 46 drehbar gelagert ist.

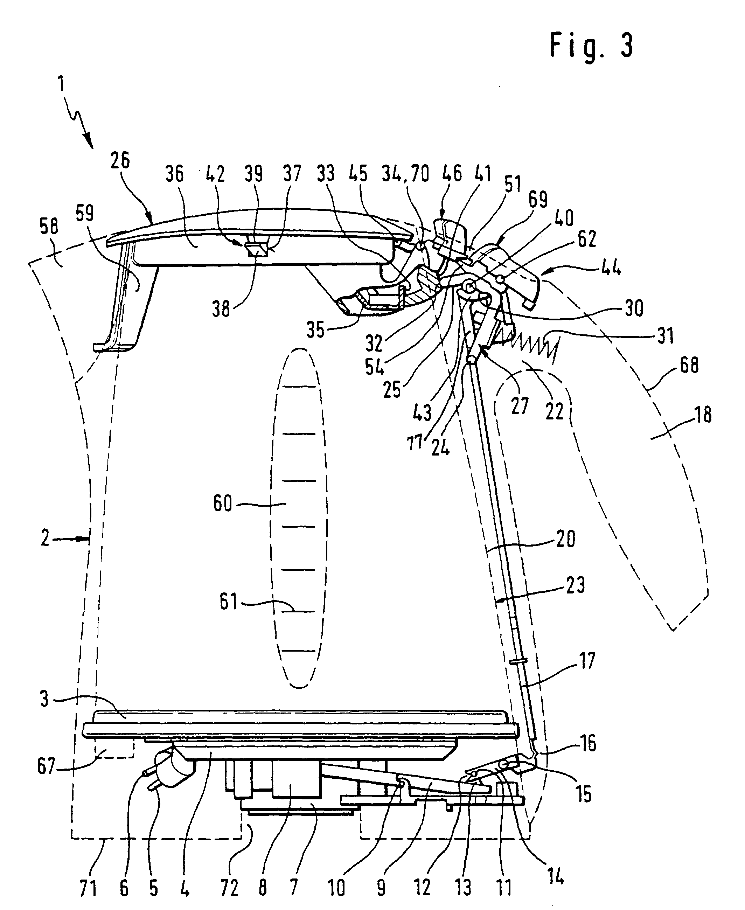

Die Taste 46 weist nach den Figuren 1 bis 5 einen nach unten und nach links wegerstrekkenden Winkelarm 63 auf, der an seinem einen Ende die erste Nehmerfläche 41 und an seinem anderen freien Ende eine dritte Anschlagfläche 47 aufweist, die an einer zweiten Nehmerfläche 33 eines im Deckel 26 gelagerten Schiebers 35 anliegt. Der im wesentlichen horizontal im Deckel 26 gegen die Kraft einer Feder (nicht dargestellt) verschiebbare Schieber 35 betätigt bei seiner Verschiebung nach links (Fig. 2, 3) die im Deckel 26 quer dazu verlaufenden und vom Schieber 35 radial heraus- bzw. hereinbewegbaren Hebel 42, die zu beiden Seiten über am Rand 36 des Deckels 26 ausgebildete Öffnungen 37 radial herausragen und die auf ihrer Unterseite eine nach oben leicht schräg verlaufende Rampe 38 und auf der Oberseite eine Sperrfläche 39 aufweisen. In der geschlossenen Stellung des Deckels 26 greifen die Hebel 42 in die am Rand der Öffnung 48 des Behälters 49 ausgebildeten Rastlöcher 66 hinein.

Die Schubstange 17 geht nach den Figuren 1 bis 5 an ihrem oberen freien Ende in eine mit Gabelabschnitten 76, 77 versehene Gabel 78 mit seitlich wegragenden Steuerzapfen 40 über, wobei letztere sowohl von oben wie von unten her klauenartig über an der Schaltwippe 69 einteilig ausgebildete Abschnitte 43 teilweise umschlossen sind. Dadurch ist die Schaltwippe 69 fest und in geringen Grenzen gelenkig mit der Schubstange 17 verbunden.

Die Abschnitte 43 weisen zur einfacheren Montage gemäß den Figuren 1 bis 3 und 5 auf der linken Seite Schlitze 75 auf, über die die Steuerzapfen 40 an der Schaltwippe 69 unter elastischer Aufweitung rastend eingehängt werden. Die Schaltwippe 69 wird um die fünfte Drehachse 62 gedreht und ist hierüber im Gehäuse 2 des Wasserkochers 1 schwenkbar gelagert. Die Schaltwippe 69 bildet ein um die Steuerzapfen 40 der Schubstange 17 gelenkiges und in geringen Grenzen schwenkbares Bauteil, das mit der Schubstange 17 das Betätigungselement 44 bildet.

Der Steuerzapfen 40 liegt je nach Schwenkstellung des Sperrhebels 27 entweder an der ersten Anschlagfläche 30 (Fig. 1 und 5) oder an der Anlagefläche 29 in der Ausnehmung 28 des Sperrhebels 27 an (Fig. 3). Liegt der Steuerzapfen 40 in der Ausnehmung 28 an der Anlagefläche 29 an, so befindet sich die Schaltwippe 69 und somit das Betätigungselement 44 in seiner Einschaltstellung, wie dies der Wasserkocher 1 gemäß Fig. 3 anzeigt. Liegt der Steuerzapfen 40 hingegen an der ersten Anschlagfläche 30 des Sperrhebels 27 an, so befindet sich die Schaltwippe 69 und somit das Betätigungselement 44 in seiner Ausschaltstellung, wie dies der Wasserkocher 1 nach Fig. 1 zeigt. Liegt der Steuerzapfen 40 genau an der Stelle, wo sich nach Fig. 2 die erste Anschlagfläche 30 mit der Anlagefläche 29 schneidet, so befindet sich der Wasserkocher 1 in seiner Bereitschaftsstellung, d.h., der Deckel 26 verschließt die Öffnung 48 des das Wasser aufnehmenden und dort erhitzenden Behälters 49, der nach Fig. 1 durch die gestrichelte rohr- oder kegelstumpfförmige Wand 50 angedeutet wird. Die Schubstange 17, die Schaltwippe 69, die Taste 46, der Sperrhebel 27 und der Schieber 35 mit seinen Hebeln 42 bilden die Sicherheitsvorrichtung 64 des Wasserkochers 1.

Die Taste 46 und die Schaltwippe 69 ragen nach den Figuren 1, 2, 3 und 5 über einen Durchbruch 51 nach oben aus der Oberseite 68 des Handgriffs 18 hervor und weisen eine Betätigungsfläche 52 bzw. 53 auf. Insbesondere aus Fig. 3 ist weiterhin ersichtlich, daß an der Schaltwippe 69 an der Vorderfläche eine in Form von zwei nebeneinander angeordneten Haken ausgebildete Mitnehmereinrichtung 54 angeformt ist, die nach Fig. 4 zwischen den beiden abgewinkelten Schenkeln 55, 56 des Sperrhebels 27 ausgebildet sind und die in ihrer Sperrstellung gemäß Fig. 1 und 5 an einer Sperrfläche 57 der Taste 46 von unten her anliegen. Hierdurch kann die Taste 46 aufgrund der blockierten Schaltwippe 69 nicht nach unten betätigt werden (Fig. 1). Um diese Stellung nochmals deutlicher erkennen zu können, wird auf die Fig. 5 hingewiesen, in der der Bereich der Taste 46, der Bereich der Schaltwippe 69 und des oberen Betätigungselements 44 sowie der Bereich des Sperrhebels 27 nochmals verdeutlicht vergrößert dargestellt wurden. Die Mitnehmereinrichtung 54 der Schaltwippe 69 ist - wie die an den Enden der Schubstange 17 u-förmig ausgebildete Gabel 78 mit ihren Gabelabschnitten 76, 77 (Fig. 4) - zwischen den Schenkeln 55, 56 des Sperrelements 27 angeordnet, während die Winkelarme 63 etwa auf gleicher Ebene wie die Schenkel 55, 56 liegen. Zur Vermeidung von Wiederholungen wurden die wichtigsten Positionsnummern aus Fig. 1 in alle anderen Figuren weitgehendst übertragen.

An dieser Stelle sei auch noch erwähnt, daß die Druckfeder 31 auch als eine entlang des Gehäuses 2 verlaufende Blattfeder ausgebildet sein kann, die dann an den Schenkeln 55, 56 (Fig. 4) angreift und diese nach den Figuren 1 bis 3 und 5 stets entgegen dem Uhrzeigersinn gegen die erste Nehmerfläche 41 drücken. Wie aus den Figuren weiter ersichtlich ist, sind der Sperrhebel 27, das Betätigungselement 44 - bestehend aus Schaltwippe 69, Schubstange 17, Kipphebel 14 und Wippe 9 - die Taste 46 und der Deckel 26 jeweils beidseitig über ihre Drehachsen 24, 62, 45, 34 gelagert.

An die Öffnung 48 schließt sich nach den Figuren 1 bis 3 an der dem Handgriff 18 gegenüberliegenden Seite eine Ausgießschnaupe 58 an, in die bei geschlossenem Deckel 26 eine am Deckel 26 nach unten hervorspringende Prallplatte 59 hineinragt. Die Prallplatte 59 dient dazu, daß beim Kochvorgang im Behälter 49 aufsprudelndes Wasser (nicht dargestellt) die Ausgießschnaupe 58 nicht verlassen kann. In der Ausgießschnaupe 58 ist noch ein in der Zeichnung nicht dargestelltes Sieb ausgebildet, das am Boden 3 sich ablagernde Kalkreste beim Ausgießen von Wasser zurückhält.

An der Mantelfläche 20 des Wasserkochers 1 ist noch nach den Figuren 1 bis 3 ein von oben nach unten verlaufendes ovales Sichtfenster 60 angeordnet, das Markierungsstriche 61 aufweist, die den Füllstand des Wassers im Behälter 49 besser erkennen lassen sollen.

Die Wirkungsweise des Wasserkochers mit der erfindungsgemäßen Sicherheitsvorrichtung 64 nach den Figuren 1 bis 5 ist folgende.

### Die Funktionsweise bei offenem Deckel:

In der in Fig. 1 und 5 dargestellten Aus-/Stellung des Wasserkochers 1 kann der Deckel 26 teilweise - wie in Fig. 1 dargestellt - oder ganz geöffnet sein, d.h., er gibt die Öffnung 48 zum Eingießen von Wasser frei. Nun kann über die Öffnung 48 Wasser in den Behälter 49 eingegossen werden, bis der Wasserspiegel die gewünschte Höhe an den am Sichtfenster 60 ausgebildeten Markierungsstrichen 61 anzeigt. Der Wasserkocher 1 kann mittels seiner Steckeranordnung 7 auf eine in der Zeichnung nicht dargestellte und entsprechend der Steckeranordnung 7 angepaßte, in einem Sockel ausgebildete Gegensteckeranordnung aufgesetzt werden. Durch die Koppelung versorgt die Gegensteckeranordnung die Stekkeranordnung 7 des Wasserkochers 1 mit Strom, allerdings in der Aus-/Stellung (bei geöffnetem Deckel 26) nur bis zu dem in der Steckeranordnung 7 ausgebildeten elektrischen Schalter 8. Eine derartige Stecker-Gegensteckeranordnung ist beispielsweise bei dem eingangs beschriebenen Wasserkocher der Firma Petra Elektrik ebenfalls vorhanden und somit offenbart und wird an dieser Stelle deshalb nicht näher beschrieben sondern es wird hierauf voll Bezug genommen.

Der Schalter 8 ist in der in Fig. 1 und 5 dargestellten Aus-/Stellung ausgeschaltet, d.h., die Wippe 9, der Kipphebel 14, die Schubstange 17 und das Betätigungselement 44 befinden sich in einer solchen Lage, die der Ausschaltstellung des Wasserkochers 1 nach Fig. 1 entspricht. Dabei schlagen - auch bei einer nahezu abgeschotteten oder ganz geöffneten Stellung des Deckels 26 gegenüber der Öffnung 48 - nach Fig. 1 und 5 die Steuerzapfen 40 an der ersten Anschlagfläche 30 des Sperrhebels 27 derart an, daß ein Verdrehen der Schaltwippe 69 im Uhrzeigersinn um die fünfte Drehachse 62 - also in die Einschaltstellung - nicht möglich ist. Das Betätigungselement 44 kann also nicht bewegt werden. Hierfür sorgen auch die Abschnitte 43, die die an den Gabelabschnitten 76, 77 ausgebildeten Steuerzapfen 40 teilweise umgreifen. Der Sperrhebel 27 läßt also eine Verdrehung der Schaltwippe 69 und somit eine Verschiebung der Schubstange 17 in Richtung Y (Fig. 4) nach oben in die Einschaltstellung nicht zu.

Da die Steuerzapfen 40 gemäß Fig. 1 und 5 nicht nur von oben durch die erste Anschlagfläche 30, sondern auch seitlich von rechts an den inneren Stirnflächen 65 anschlagen, kann sich das Sperrelement 27 nicht weiter entgegen der Richtung des Uhrzeigersinns verdrehen, obwohl die Druckfeder 31 von außen her gegen das Sperrelement 27 drückt. Bei bereits geringfügig von der Öffnung 48 hochgeschwenktem Deckel 26 ist also der Schalter 8 zwangsweise immer in seiner Aus-/Stellung und dabei die Heizung 4 abgeschaltet.

### Die Funktionsweise beim Verschließen des Deckels:

Soll der Deckel 26 nach dem Füllvorgang des Wasserkochers 1 mit Wasser die Öffnung 48 verschließen, so wird dieser von oben her mit einer Hand (nicht dargestellt) einer Bedienungsperson so weit gegen den Rand 73 der Öffnung 48 gedrückt, bis sich die Hebel 42 - durch die Rampen 38 veranlaßt - in den Raum im Deckel 26 hineinbewegen und der Deckel 26 zunächst seine in Fig. 2 dargestellte Schließstellung und anschließend nach Einschalten des Wasserkochers seine in Fig. 3 dargestellte Sperrstellung einnimmt. Sobald der Deckel 26 die Schließstellung nach Fig. 2 erreicht hat, werden die Hebel 42 aufgrund einer vorgespannten Feder (nicht dargestellt) radial nach außen gedrückt und greifen dabei in die Rastlöcher 66 selbsttätig rastend ein. Der Deckel 26 hat seine Schließstellung eingenommen und kann nur durch Zurückziehen der Hebel 42 über die Taste 46 wieder geöffnet werden.

An dieser Stelle sei noch erwähnt, daß beim Schließen des Deckels 26 selbstverständlich auch die Taste 46 und das Sperrelement 27 zunächst von der Stellung nach Fig. 1, in die Stellung nach Fig. 2 bewegt wurden. Beim Verschließen des Deckels 26 drückt nämlich der Schieber 35 über seine zweite Nehmerfläche 33 nicht nur den Winkelarm 63 und somit die Taste 46 in seine Ausgangsstellung, sondern es wird gleichzeitig dabei über die erste Nehmerfläche 41 das Sperrelement 27 so weit im Uhrzeigersinn um die zweite Drehachse 24 geschwenkt, daß dieser die in Fig. 2 dargestellte Bereitschaftsstellung einnimmt, d.h., das Sperrelement 27 nimmt eine derartige Stellung ein, daß der Steuerzapfen 40 sich am Übergang von der ersten Anschlagfläche 30 zur Anlagefläche 29 des Sperrelements 27 befindet.

### Einschalten des Wasserkochers:

In der Bereitschaftsstellung, also der absoluten Schließstellung des Deckels 26, kann nunmehr durch Verdrehung der Schaltwippe 69 im Uhrzeigersinn der Wasserkocher 1 eingeschaltet werden. Durch die Verdrehung der Schaltwippe 69 um die fünfte Drehachse 62 werden durch die Abschnitte 43 die Steuerzapfen 40 nach Fig. 3 derart nach oben bewegt, daß sie in die Ausnehmungen 28 des Sperrelements 27 eingreifen. Dabei wird die Schubstange 17 in Richtung Y (Fig. 4) nach oben bewegt. Gleichzeitig wird über das Scharnier 16 der Kipphebel 14 um die erste Drehachse 15 derart entgegen dem Uhrzeigersinn bewegt, daß dabei über den zweiten Lagerzapfen 11 die Wippe 9 im Uhrzeigersinn um den Lagerzapfen 10 gedreht wird. Der in der Steckeranordnung 7 ausgebildete Schalter 8 wird eingeschaltet und die Heizung 4 mit Strom versorgt. Die Einschaltstellung wird in Fig. 3 deutlich gezeigt.

Nun kann sich die Heizung 4 aufheizen und gibt die Wärme an den gut wärmeleitenden Boden 3 ab, über den das im Raum 49 befindliche Wasser (nicht dargestellt) erhitzt wird. Ein unterhalb am Boden 3 befestigter Temperaturregeler 67 (nur angedeutet) ist in den Stromkreis zwischen Heizung 4 und Schalter 8 eingebunden und schaltet den Strom zur Heizung 4 ab, sobald das Wasser die vorgegebene Temperatur bzw. seine Siedetemperatur, die sogar bis zum maximalen Blasensieden des Wassers führen kann, erreicht hat.

### Abbruch des Heizvorgangs:

In der Einschaltstellung gemäß Fig. 3 des Wasserkochers 1 kann der Deckel 26 nur dann über die Taste 46 geöffnet werden, wenn gleichzeitig die Schaltwippe 69, also das Betätigungselement 44, in seine Aus-/Stellung zurückbewegt wird. Wird nämlich zum Öffnen des Deckels 26 die Taste 46 im Uhrzeigersinn verdreht, so wird der Deckel 26 - wie bereits oben beschrieben - geöffnet, dieser Bewegung folgt aber die Schaltwippe 69 zwangsweise, da über die an der Taste 46 ausgebildete Sperrfläche 57 bei dessen Verdrehung die Mitnehmereinrichtung 54 ebenfalls nach unten bewegt wird und dabei die Schaltwippe 69 um seine Drehachse 62 entgegen dem Uhrzeigersinn verdreht wird. Die Folge ist, daß die Schubstange 17 in Richtung Y (Fig. 4) nach unten bewegt wird, wodurch der Kipphebel 14 im Uhrzeigersinn und die Wippe 9 entgegen dem Uhrzeigersinn verdreht werden. Der Schalter 8 wird ausgeschaltet, wie dies die Stellung gemäß Fig. 2 zeigt. Da in der Einschaltstellung gemäß Fig. 3 die Steuerzapfen 40 in ihrer Bewegung nach unten nicht durch das Sperrelement 27 blockiert sind, kann jederzeit die Schaltwippe 69 entgegen dem Uhrzeigersinn betätigt und somit über das Betätigungselement 44 die Heizung 4 abgeschaltet werden.

### Die Funktionsweise beim Öffnen des Deckels aus seiner Schließstellung heraus:

Wird über die Betätigungsfläche 52 die Taste 46 um ihre Drehachse 45 (vierte) im Uhrzeigersinn nach den Figuren 1 und 5 gedreht, so hebt sich bei weiterhin blockiertem Sperrelement 27 die erste Nehmerfläche 41 von der zweiten Anschlagfläche 32 ab und der Winkelarm 63 drückt über seine dritte Anschlagfläche 47 den Schieber 35 in der Zeichnung nach links, was aber in der Zeichnung nicht dargestellt ist. Dabei muß allerdings zunächst entgegen der Kraft einer im Deckel 26 ausgebildeten, aber in der Zeichnung nicht dargestellten Feder der Schieber 35 nach Fig. 1 so weit nach links verschoben werden, bis die an den Hebeln 42 ausgebildeten Sperrflächen 39 sich über die Öffnungen 37 in den im Deckel 26 ausgebildeten Raum (nicht dargestellt) hineinbewegen und somit nicht mehr mit den am Rand der Öffnung 48 ausgebildeten Rastlöchern 66 (Fig. 1) in Eingriff stehen.

Sobald die Sperrflächen 39 die Rastlöcher 66 freigeben, springt der Deckel 26 in die in Fig. 1 dargestellte teilweise Offenstellung und der Schieber 35 nimmt wieder aufgrund der Kraft der Feder (nicht dargestellt) seine Ausgangsstellung (Fig. 1) ein. Nun liegen die Rampen 38 am Rand 73 der Öffnung 48 an und lassen auf diese Weise den Deckel 26 auf der Öffnung 48 aufliegen. Ein teilweises Aufspringen des Deckels 26 erfolgt aufgrund des von der Taste 46 auf den Deckel 26 eingegebenen Aufschwenkdrehmoments im Uhrzeigersinn. Und dies deshalb, weil die zweite Nehmerfläche 33 nach den Figuren 1 bis 3 und 5 unterhalb der Drehachse 34 (dritte) des Deckels 26 liegt

An dieser Stelle sei noch erwähnt, daß es auch möglich ist, daß, sobald die eingestellte Wassertemperatur erreicht ist, der Schalter sich selbsttätig - thermogesteuert - ausschaltet und dabei über die Wippe 9 das Betätigungselement 44 in seine Aus-/Stellung bewegt, wie dies Fig. 2 zeigt. Dabei wird auch die Schaltwippe 69 vom Schalter 8 zwangsrückgestellt und kann erst dann wieder eingeschaltet werden, wenn der Deckel 26 einmal geöffnet und anschließend wieder verschlossen wurde.

## Patentansprüche

1. Elektrisch beheizbarer Wasserkocher (1), bestehend aus einem Behälter (49) mit einem Boden (3), an den sich nach oben eine umlaufende Seitenwand (50) mit einem daran ausgebildeten Handgriff (18) anschließt, deren freies Ende von einer Öffnung (48) gebildet wird, die von einem Deckel (26) im wesentlichen verschließbar ist, mit einer in Nähe des Bodens (3) ausgebildeten elektrischen Heizung (4), die von einem mechanisch gesteuerten Schalter (8) ein- bzw. ausschaltbar ist und die bei eingeschaltetem Wasserkocher (1) im Behälter (49) befindliches Wasser erhitzt, mit einem an den Schalter (8) gekoppelten und von Hand bedienbaren Betätigungselement (44), das bei dessen Betätigung eine Bewegung auf den Schalter (8) überträgt und mit einer am Deckel (26) angreifenden, von Hand betätigbaren Taste (46), die bei ihrer Betätigung den Deckel (26) zum Öffnen (48) freigibt,
**dadurch gekenzeichnet,**
daß ein Sperrelement (27) vorgesehen ist, das das Betätigungselement (44) nur dann zum Einschalten des Schalters (8) mechanisch freigibt, wenn der Deckel (26) die Öffnung (48) verschließt.

2. Wasserkocher nach Anspruch 1,
**dadurch gekenzeichnet,**
daß beim Öffnen des Deckels (26) durch die Taste (46) das Betätigungselement (44) zwangsweise mitbetätigt und der Schalter (8) ausgeschaltet wird.

3. Wasserkocher nach Anspruch 2,
**dadurch gekenzeichnet,**
daß eine bei Betätigung der Taste (46) auf das Betätigungselement (44) einwirkende Mitnehmereinrichtung (54) vorgesehen ist, die beim Öffnen des Deckels (26) am Betätigungselement (44) angreift und dieses in seine Ausstellung bewegt.

4. Wasserkocher nach einem der Ansprüche 1 bis 3,
**dadurch gekenzeichnet,**
daß das Sperrelement (27) durch die Bewegung des Deckels (26) in Schließstellung in eine den Schalter (8) freigebende Freigabelage und in Offenstellung des Deckels (26) in eine den Schalter (8) sperrende Sperrlage steuerbar ist, wobei an dem Betätigungselement (44) ein mit dem Sperrelement (27) korrespondierender Steuerzapfen (40) ausgebildet ist, der in Offenstellung des Deckels (26) an einer am Sperrelement (27) ausgebildeten ersten Anschlagfläche (30) anliegt und daher in seiner Bewegung blokkiert wird und in Schließstellung des Deckels (26) in eine am Sperrelement (27) ausgebildete Ausnehmung (28) eingreifen kann und dadurch ein Bewegen des Betätigungselements (44) und somit ein Einschalten des Wasserkochers (1) zuläßt.

5. Wasserkocher nach Anspruch 4,
**dadurch gekenzeichnet,**
daß zum Öffnen des Deckels (26) die auf den Deckel (26) einwirkende Taste (46) am Gehäuse (2) verschiebbar, vorzugsweise drehbar gelagert ist, deren einer Arm (63) einerseits die mechanische Verbindung zu einer am Deckel (26) ausgebildeten Verriegelungsanordnung (35, 37, 38, 39, 42) in die Offenstellung bringt und andererseits dabei das Sperrelement (27) der Drehbewegung der Taste (46) derart folgt, daß dabei das Betätigungselement (44) in seiner Drehung blockiert wird.

6. Wasserkocher nach Anspruch 4,
**dadurch gekenzeichnet,**
daß das Betätigungselement (44) aus zwei Teilen besteht, die ein Kurbelgetriebe bilden, wobei das eine Teil aus einer um seine Drehachse (62) bewegbare Schaltwippe (69) und das andere Teil aus einer die Drehbewegung in eine Auf- bzw. Abbewegung umsetzende Schubstange (17) besteht, und daß die Schubstange (17) und die Schaltwippe (69) über Steuerzapfen (40) miteinander verbunden sind.

7. Wasserkocher nach Anspruch 6,
**dadurch gekenzeichnet,**
daß die Schubstange (17) am tastenseitigen Ende gabelförmig ausgebildet ist, daß an den Gabelabschnitten (76, 77) jeweils ein Steuerzapfen (40) ausgebildet ist, daß die Steuerzapfen (40) in jeweils einen an den Abschnitten (43) der Schaltwippe (69) ausgebildeten Schlitz (75) eingreifen und daß jeder Steuerzapfen (40) mit der Innenfläche (25) der Schenkel (55, 56) des Sperrhebels (27) korrespondiert.

8. Wasserkocher nach Anspruch 6 oder 7,
**dadurch gekenzeichnet,**
daß die Schaltwippe (69), das Sperrelement (27), die Taste (46) und der Deckel (26) um eigene Schwenkachsen (62, 24, 45, 34) drehbar sind, die räumlich voneinander getrennt sind und die im wesentlichen parallel zueinander verlaufen.

9. Wasserkocher nach Anspruch 8,
**dadurch gekenzeichnet,**
daß die Schaltwippe (69) und die Taste (46) einen an der Oberseite (68) des Handgriffs (18) ausgebildeten Durchbruch (51) durchdringen und von Hand betätigbare Betätigungsflächen (53, 52) aufweisen, die benachbart und von außen zugänglich sind.

10. Wasserkocher nach Anspruch 9,
**dadurch gekenzeichnet,**
daß die Betätigungsflächen (53, 52) an der Oberseite (68) in Nähe des Deckels (26) ausgebildet sind.

11. Wasserkocher nach einem der Ansprüche 6 bis 10,
**dadurch gekenzeichnet,**
daß im Bereich des Bodens (3) des Behälters (49) die Schubstange (17) über ein flexibles Scharnier (16) in einen abgewinkelten Kipphebel (14) übergeht, daß der Kipphebel (14) über eine erste Drehachse (15) drehbar am Gehäuse (2) gelagert ist und daß dessen dem flexiblen Scharnier (16) gegenüberliegendes Ende mit einer Wippe (9) über einen zweiten Lagerzapfen (12) verbunden ist, die ihrerseits in ihrem mittleren Bereich über einen ersten Lagerzapfen (10) am Gehäuse (2) schwenkbar gelagert ist und die andererseits mit ihrem dem Lagerzapfen (12) gegenüberliegenden Ende mit dem Schalter (8) zum Ein- bzw. Ausschalten verbunden ist.

## Claims

1. An electrically heatable water kettle (1) comprising a vessel (49) having a bottom (3) with an upwardly adjoining circumferential side wall (50) on which is formed a handle (18) and whose free end is formed by an opening (48) essentially closable by a lid (26), having an electric heating unit (4) arranged in proximity to the bottom (3) and adapted to be switched on and off by a mechanically controlled switch (8) so that, with the water kettle (1) switched on, it heats any water contained in the vessel (49), having an actuating element (44) coupled to said switch (8) and operable by hand so that its actuation transmits a movement to the switch (8), and having a button (46) acting on the lid (26) and operable by hand so that its actuation releases the lid (26) for opening (48),
**characterized in that** a detent element (27) is provided which mechanically releases the actuating element (44) for activating the switch (8) only when the lid (26) closes the opening (48).

2. The water kettle as claimed in claim 1,
**characterized in that** when the lid (26) is opened by the button (46) this perforce actuates also the actuating element (44) and deactivates the switch (8).

3. The water kettle as claimed in claim 2,
**characterized in that** provision is made for a follower device (54) acting on the actuating element (44) on operation of the button (46), said follower device bearing against the actuating element (44) as the lid (26) is opened, moving it into its off position.

4. The water kettle as claimed in any one of the claims 1 to 3,
**characterized in that** the detent element (27) is movable into a position releasing the switch (8) as a result of the movement of the lid (26) into the closed position, while with the lid (26) in the open position it is movable into a position locking the switch (8), with a control pin (40) which corresponds with the detent element (27) being provided on the actuating element (44), said control pin engaging a first stop surface (30) provided on the detent element (27) with the lid (26) in the open position and being therefore inhibited in its movement while, with the lid (26) in the closed position, it is able to engage in a recess (28) provided on the detent element (27), thereby permitting a movement of the actuating element (44) and hence activation of the water kettle (1).

5. The water kettle as claimed in claim 4,
**characterized in that** for opening the lid (26) the button (46) acting on the lid (26) is slidably, preferably rotatably, mounted on the housing (2), the button's one arm (63) causing the mechanical connection to a latching arrangement (35, 37, 38, 39, 42) provided on the lid (26) to adopt the open position while, as this occurs, the detent element (27) follows the rotary movement of the button (46) such as to inhibit the actuating element (44) in its rotation.

6. The water kettle as claimed in claim 4,
**characterized in that** the actuating element (44) is comprised of two parts forming a crank mechanism, the one part being a rocker control (69) movable about its axis of rotation (62) and the other part a push-rod (17) converting the rotary movement into an up and down movement, and that the push-rod (17) and the rocker control (69) are connected with each other through control pins (40).

7. The water kettle as claimed in claim 6,
**characterized in that** the push-rod (17) has a fork-shaped configuration at the end close to the button, that a respective control pin (40) is provided on the fork sections (76, 77), that the control pins (40) engage a respective slit (75) provided on the sections (43) of the rocker control (69), and that each control pin (40) corresponds with the inner surface (25) of the legs (55, 56) of the detent lever (27).

8. The water kettle as claimed in claim 6 or..7,
**characterized in that** the rocker control (69), the detent element (27), the button (46) and the lid (26) are rotatable about pivot axes (62, 24, 45, 34) of their own which are spaced from, and extend essentially parallel to, each other.

9. The water kettle as claimed in claim 8,
**characterized in that** the rocker control (69) and the button (46) project through a cutout (51) provided on the top side (68) of the handle (18) and include manually operable control surfaces (53, 52) situated adjacent to each other and accessible from outside.

10. The water kettle as claimed in claim 9,
**characterized in that** the control surfaces (53, 52) are provided on the top side (68) in proximity to the lid (26).

11. The water kettle as claimed in any one of the claims 6 to 10,
**characterized in that** in the area of the bottom (3) of the vessel (49) the push-rod (17) merges into an angled rocking lever (14) via a flexible hinge (16), that the rocking lever (14) is mounted on the housing (2) for rotation about a first axis of rotation (15), and that the rocking lever's end on the side remote from the flexible hinge (16) is connected with a rocker (9) through a second bearing trunnion (12), said rocker having its central area pivotally mounted on the housing (2) via a first bearing trunnion (10) while its end on the side remote from the bearing trunnion (12) is connected with the switch (8) for switching on and off.

## Revendications

1. Bouilloire (1) électrique constituée par un récipient (49) avec un fond (3) auquel se raccorde vers le haut une paroi latérale (50) périphérique (18) avec- une poignée réalisée sur celle-ci, dont l'extrémité libre est formée par une ouverture (48) qui peut être sensiblement fermée par un couvercle (26), avec un chauffage (4) électrique réalisé à proximité du fond (3), qui peut être mis en marche et coupé par un commutateur à commande mécanique et qui chauffe l'eau se trouvant dans le récipient (49) lorsque la bouilloire (1) est mise en marche, avec un élément d'actionnement (44) couplé au commutateur (8) et à commande manuelle qui transmet au commutateur (8) un mouvement lors de son actionnement, et avec une touche (46) actionnable à la main et attaquant le couvercle (26), laquelle libère lors de son actionnement le couvercle (26) pour son ouverture (48),
**caractérisée en ce qu'**il est prévu un élément de blocage (27) qui ne libère mécaniquement l'élément d'actionnement (44) pour mettre en marche le commutateur (8) que lorsque le couvercle (26) ferme l'ouverture (48).

2. Bouilloire selon la revendication 1, **caractérisée en ce que** lorsquon ouvre le couvercle (26) avec la touche (46), l'élément d'actionnement (44) est obligatoirement actionné conjointement et le commutateur (8) est coupé.

3. Bouilloire selon la revendication 2, **caractérisée en ce qu'**il est prévu un dispositif d'entraînement (54) qui agit sur l'élément d'actionnement (44) lorsqu'on actionne la touche (46), ledit dispositif d'entraînement attaquant l'élément d'actionnement (44) lors de l'ouverture du couvercle (26) et déplace celui-ci dans sa position d'arrêt.

4. Bouilloire selon l'une quelconque des revendications 1 à 3, **caractérisée en ce que** l'élément de blocage (27) est commandable par le mouvement du couvercle (26) en position de fermeture jusque dans une position de libération libérant le commutateur (8) et en position d'ouverture du couvercle (26) jusque dans une position de blocage bloquant le commutateur (8), un tourillon de commande (40) correspondant à l'élément de blocage (27) étant réalisé sur l'élément d'actionnement (44), qui est en appui, en position d'ouverture du couvercle (26), sur une première surface de butée (30) réalisée sur l'élément de blocage (27) et qui est donc bloqué dans son mouvement, et qui, en position de fermeture du couvercle (26), peut s'engager dans un évidement (28) réalisé sur l'élément de blocage (27) et permet ainsi un mouvement de l'élément d'actionnement (44) et par conséquent une mise en marche de la bouilloire (1).

5. Bouilloire selon la revendication 4, **caractérisée en ce que** pour ouvrir le couvercle (26), la touche (46) agissant sur le couvercle (26) est montée à déplacement sur le boîtier (2), de préférence en rotation, dont un bras (63) amène d'une part la liaison mécanique avec un dispositif de verrouillage (35, 37, 38, 39, 42) dans la position d'ouverture, et d'autre part l'élément de blocage (27) suit ici le mouvement de rotation de la touche (46) de telle sorte que l'élément d'actionnement (44) est alors bloqué dans sa rotation.

6. Bouilloire selon la revendication 4, **caractérisée en ce que** l'élément d'actionnement (44) est constitué de deux parties qui forment un mécanisme à manivelle, une des parties étant constituée d'une bascule de commutation (69) mobile autour de son axe de rotation et l'autre partie étant constituée d'une tige de poussée (17) transformant le mouvement de rotation en un mouvement de montant/descendant, et **en ce que** la tige de poussée (17) et la bascule de commutation (69) sont reliées l'une à l'autre par l'intermédiaire de tourillons de commande (40).

7. Bouilloire selon la revendication 6, **caractérisée en ce que** la tige de poussée (17) est réalisée en forme de fourche à l'extrémité côté touche, **en ce que** sur chacun des tronçons de fourche (76, 77) est réalisé un tourillon de commande (40), **en ce que** les tourillons de commande (40) s'engagent dans une fente (75) respective réalisée sur les tronçons (43) de la bascule de commutation (69) et **en ce que** chaque tourillon de commande (40) correspond à la surface intérieure (25) des branches (55, 56) du levier de blocage (27).

8. Bouilloire selon l'une ou l'autre des revendications 6 et 7, **caractérisée en ce que** la bascule de commutation (69), l'élément de blocage (27), la touche (46), et le couvercle (26) sont rotatifs autour de propres axes de pivotement (62, 24, 45, 34) qui sont séparés les uns des autres dans l'espace et qui s'étendent de manière sensiblement parallèle les uns aux autres.

9. Bouilloire selon la revendication 8, **caractérisée en ce que** la bascule de commutation (69) et la touche (46) traversent une percée (51) réalisée sur la face supérieure (68) de la poignée (18) et présentent des surfaces d'actionnement (53, 52) susceptibles d'être actionnées à la main, qui sont voisines et accessibles depuis l'extérieur.

10. Bouilloire selon la revendication 9, **caractérisée en ce que** les surfaces d'actionnement (53, 52) sont réalisées sur la face supérieure (68) à proximité du couvercle (26).

11. Bouilloire selon l'une quelconque des revendications 6 à 10, **caractérisée en ce que** dans la région du fond (3) du récipient (49), la tige de poussée (17) se transforme via une charnière flexible (16) en un levier basculant (14) coudé, **en ce que** le levier basculant (14) est monté rotatif sur le boîtier (2) via un premier axe de rotation (15) et **en ce que** son extrémité opposée à la charnière (16) flexible est reliée à une bascule (9) via un deuxième tourillon (12), laquelle est à son tour montée pivotante, dans sa région médiane, sur le boîtier (2) via un premier tourillon (10) et laquelle est à son tour reliée avec son extrémité opposée au tourillon (12) avec le commutateur (8) pour la mise en marche et la coupure, respectivement.
